(19) **Europäisches Patentamt**

**European Patent Office**

**Office européen des brevets**

(11) **EP 1 696 245 A2**

(12) **EUROPÄISCHE PATENTANMELDUNG**

| | |
|---|---|
| (43) Veröffentlichungstag:<br>**30.08.2006  Patentblatt 2006/35** | (51) Int Cl.:<br>**G01S 13/84** (2006.01)  **G01S 13/87** (2006.01)<br>**G01S 13/75** (2006.01)  **G01S 5/02** (2006.01)<br>**G01S 5/06** (2006.01)  **G08B 3/10** (2006.01) |
| (21) Anmeldenummer: **05024992.9** | |
| (22) Anmeldetag: **16.11.2005** | |

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | (72) Erfinder:<br>• **Stobbe, Anatoli**<br>  **30890 Barsinghausen (DE)**<br>• **Merk, Holger**<br>  **30890 Barsinghausen (DE)**<br>• **Werner, Andreas**<br>  **30167 Hannover (DE)** |
| (30) Priorität: **28.02.2005   DE 102005009579** | (74) Vertreter: **Patentanwälte Thömen & Körner**<br>**Zeppelinstrasse 5**<br>**30175 Hannover (DE)** |
| (71) Anmelder: **ASTRA Gesellschaft für Asset Management mbH & Co.**<br>**KG**<br>**30890 Barsinghausen (DE)** | |

(54)   **Verfahren zur Lokalisierung eines Detektierplättchens**

(57)   Es wird ein Verfahren zur Lokalisierung eines Detektierplättchens beschrieben, das ein Detektiersignal abstrahlt, das von einem Lesegerät empfangen und ausgewertet wird.

Aus einem laufzeitabhängigen Merkmal des empfangenen Detektiersignals und der Ausbreitungsgeschwindigkeit elektromagnetischer Wellen wird der aktuelle Abstand zwischen dem Lesegerät und dem Detektierplättchen bestimmt.

Fig. 1

EP 1 696 245 A2

**Beschreibung**

Die Erfindung betrifft ein Verfahren zur Lokalisierung eines Detektierplättchens nach dem Oberbegriff des Anspruchs 1.

Zur Identifikation von Gütern bei der Lagerhaltung und beim Transport werden zunehmend Detektierplättchen eingesetzt, die jeweils mit den Gütern verbunden sind und eindeutige Identifikationsinformationen speichern. Durch Lesen der Identifikationsinformationen mittels eines Lesegerätes können so die Güter identifiziert werden.

Sind mehrere Güter in einer räumlich ausgedehnten Transport- oder Lagereinheit enthalten, sind zur Identifizierung Detektierplättchen und Lesegeräte mit einem ausreichend großen Erfassungsbereich erforderlich. Ferner ist auch die Anwendung eines Vereinzelungsverfahrens notwendig. Detektierplättchen und Lesegeräte, die auf Frequenzen im UHF-Bereich und darüber arbeiten, erfüllen die Voraussetzungen dafür. In diesem Frequenzbereich ist sowohl die notwendige hohe Reichweite als auch die notwendige hohe Datenübertragungsrate realisierbar, um alle im gewünschten Erfassungsbereich gleichzeitig befindlichen Detektierplättchen in ausreichend kurzer Zeit vereinzeln und getrennt lesen zu können.

Da die Feldausbreitung im UHF-Bereich durch Reflexion und Absorption inhomogen sein kann, muss die Sendeleistung und Empfangsempfindlichkeit des Lesegerätes allerdings so groß sein, dass Detektierplättchen auch unter ungünstigen Konstellationen im angestrebten Erfassungsbereich sicher gelesen werden können. Dadurch ergibt sich das Problem, dass das Lesefeld bei mehreren benachbarten Transport- oder Lagereinheiten nicht gezielt auf eine ausgewählte Transport- oder Lagereinheiten beschränkt werden kann, sondern auch angrenzende Transport- oder Lagereinheiten erfasst. Um somit Güter einer ausgewählten Transport- oder Lagereinheit von Gütern anderer Transport- oder Lagereinheiten unterscheiden zu können, müssen deshalb die mit den Gütern verbundenen Detektierplättchen nach dem Lesen zusätzlich lokalisiert und anschließend selektiert werden.

Der Erfindung liegt die Aufgabe zugrunde, ein Verfahren zur Lokalisierung eines Detektierplättchens zu schaffen, welches die Erfassung wenigstens einer Ortskoordinate ermöglicht.

Diese Aufgabe wird bei einem Verfahren nach dem Oberbegriff des Anspruchs 1 durch die Merkmale dieses Anspruchs gelöst.

Weiterbildungen und vorteilhafte Ausgestaltungen ergeben sich aus den Unteransprüchen.

Die Erfindung geht von einem Detektierplättchen aus, das ein Detektiersignal abstrahlt, das von einem Lesegerät empfangen und ausgewertet wird. Dies kann ein passives Detektierplättchen sein, das das Trägersignal des Lesegerätes in Takte der Modulation in Amplitude und/oder Phase verändert oder ein aktives Detektierplättchen, dessen Detektiersignal einen Träger umfasst, der synchron zum Trägersignal des Lesegerätes generiert wird.

Aufgrund der endlichen Ausbreitungsgeschwindigkeit elektromagnetischer Wellen verändern sich laufzeitabhängige Merkmale des Detektiersignals auf dem Weg vom Detektierplättchen zum Lesegerät. Die Änderung der Laufzeit ist dabei proportional zum Abstand zwischen dem Detektierplättchen und dem Lesegerät. Durch Auswertung des laufzeitabhängigen Merkmals des vom Lesegerät empfangenen Detektiersignals in Verbindung mit der bekannten Ausbreitungsgeschwindigkeit elektromagnetischer Wellen kann der Abstand bestimmt werden.

Vorzugsweise wird als laufzeitabhängiges Merkmal des empfangenen Detektiersignals die Phase und Amplitude des Detektiersignals ausgewertet.

Die Auswertung des laufzeitabhängigen Merkmals kann in diesem Fall nach der ohnehin für die Datengewinnung erforderlichen Demodulation und damit in einem niedrigeren Frequenzbereich im Vergleich zur Frequenz des Trägersignals erfolgen.

Bei einer ersten Ausführungsform des Verfahrens empfängt wenigstens während einer Lokalisierungszeitspanne das Detektierplättchen vom Lesegerät ein Trägersignal und strahlt ein mit einem Modulationssignal moduliertes Detektiersignal ab, das die gleiche Frequenz wie das Trägersignal besitzt. Das Modulationssignal weist Signalpunkte auf, die in einem Signalraumdiagramm durch eine Gerade approximierbar sind. Das vom Lesegerät empfangene Detektiersignal wird demoduliert, die Differenz der Phasenlage des Detektiersignals bei einem aktuellen Abstand und einem Referenzabstand zwischen Detektierplättchen und Lesegerät wird bestimmt und aus der Differenz der Phasenlage, der Trägerfrequenz und der Ausbreitungsgeschwindigkeit der elektromagnetischen Wellen wird der aktuelle Abstand zwischen dem Detektierplättchen und dem Lesegerät bestimmt.

Durch diese Vorschrift, dass das Modulationssignal Signalpunkte aufweist, die in einem Signalraumdiagramm durch eine Gerade approximierbar sind, wird erreicht, dass die Phasenlage des Detektiersignals reproduzierbar ist. Der Übergang zwischen den Signalpunkten muss nicht durch eine Gerade approximierbar sein. Außerhalb der Lokalisierungszeitspanne sind auch andere Modulationsarten anwendbar, bei denen die Signalpunkte in einem Signalraumdiagramm beliebig liegen können.

Durch die endliche Ausbreitungsgeschwindigkeit elektromagnetischer Wellen ergibt sich ein Zeitunterschied zwischen Aussendung des Detektiersignals und Empfang beim Lesegerät, der zu einer Differenz zwischen der Phasenlage des vom Lesegerät erzeugten Trägersignals und der Phaselage des vom Lesegerät empfangenen Detektiersignals gleicher Frequenz führt. Diese Differenz der Phasenlagen ist ein Maß für den Abstand zwischen dem Detektierplättchen und dem Lesegerät.

Da die Differenz der Phasenlagen außerdem von der Frequenz des Trägersignals abhängt, ergibt sich bei den kurzen Wellenlängen im UHF-Bereich ein ausreichend großer Wert für die Differenz der Phasenlagen, um eine Abstandmessung mit einer Auflösung im cm-Bereich technisch realisieren zu können. Signallaufzeiten innerhalb des Lesegerätes und Detektierplättchens können als konstant betrachtet werden und beeinflussen die Differenz von Phasenlagenänderungen bei Abstandsänderungen nicht.

Zur mathematischen Beschreibung der Signale werden folgende Abkürzungen verwendet:

a   Abstand zwischen Detektierplättchen und Lesegerät
f   Trägerfrequenz des Lesegerätes
c   Ausbreitungsgeschwindigkeit der Wellen in Luft
t   Laufzeit des Signals vom Lesegerät zum Detektierplättchen und zurück
$\lambda$   Wellenlänge der Trägerfrequenz; $\lambda$ = c/f
T   Periodenbauer bei f; T = 1/f
n   Kreiszahl
$\alpha$   Phasenlage; $\alpha = 2\pi * t/T$
N   0, 1, 2... Mehrdeutigkeit der Phasenlage

Für die Laufzeit ergibt sich t = 2*a/c und nach Umstellung für den Abstand a = t*c/2. Unter Einbeziehung der Phasenlage folgt für die Laufzeit t = $(\alpha/2\pi$ + N) * T und nach Umstellung für den Abstand a = $(\alpha/2\pi$ + N) * T * c/2 oder a = $(\alpha/2\pi$ + N) * 1/f * c/2 oder a = $\alpha$ * c/4nf für N = 0.

Bei der Trägerfrequenz f nimmt die Phasenlage nach einer Strecke $\lambda/2$ wieder denselben Wert an. Die Strecke $\lambda/2$ ergibt sich daraus, dass die Laufzeit t des Signals sowohl den Weg vom Lesegerät zum Detektierplättchen hin als auch den Weg vom Detektierplättchen zum Lesegerät zurück umfasst. Innerhalb einer Strecke < $\lambda/2$ ist die Differenz der Phasenlagen zwischen einem aktuellen Abstand und einem Referenzabstand eindeutig. Bei eine Strecke > $\lambda/2$ treten Mehrdeutigkeiten N auf, die durch stetige Aktualisierung des Aufenthaltsortes des Detektierplättchens in Schritten < $\lambda/2$ aufgelöst werden können.

Eine andere Möglichkeit, Mehrdeutigkeiten bei Strecken > $\lambda/2$ zu beseitigen, besteht bei einer zweiten Ausführungsform des Verfahrens. Wenigstens während einer Lokalisierungszeitspanne empfängt das Detektierplättchen vom Lesegerät Trägersignale einer ersten und anschließend wenigstens einer zweiten Frequenz und strahlt mit jeweils einem Modulationssignal modulierte Detektiersignale ab, die jeweils die gleiche Frequenz wie die Trägersignale besitzen. Die Modulationssignale weisen Signalpunkte auf, die in einem Signalraumdiagramm durch eine Gerade approximierbar sind. Die vom Lesegerät empfangenen Detektiersignale werden demoduliert, die jeweilige Phasenlage des jeweiligen Detektiersignals wird bestimmt und durch gemeinsame Auswertung wird aus den Phasenlagen, den Trägerfrequenzen und der Ausbreitungsgeschwindigkeit der elektromagnetischen Wellen der aktuelle Abstand zwischen dem Detektierplättchen und dem Lesegerät bestimmt.

Alternativ kann das Detektierplättchen vom Lesegerät Trägersignale einer ersten und gleichzeitig wenigstens einer zweiten Frequenz empfangen und gleichzeitig mit jeweils einem Modulationssignal modulierte Detektiersignale abstrahlen. Die vom Lesegerät empfangenen Detektiersignale werden durch Filter getrennt und demoduliert, die jeweilige Phasenlage des jeweiligen Detektiersignals wird gleichzeitig bestimmt.

Durch eine gleichzeitige Abstrahlung der Detektiersignale auf unterschiedlichen Frequenzen gegenüber einer zeitversetzten Abstrahlung werden zeitveränderliche Einflüsse des Lesefeldes und des Abstandes auf das Auswertungsergebnis vermieden.

Bei unterschiedlichen Frequenzen treten bei gleichen Abstanden andere Phasenlagen auf. Da die Phasenlagen bei diesen unterschiedlichen Frequenzen proportional zum Abstand sind, ist auch die Differenz der Phasenlagen proportional zum Abstand. Daher ergibt sich der Abstand nicht nur für die absolute Phasenlage bei einer Frequenz, sondern auch für die Differenz der Phasenlagen bei der Differenz unterschiedlicher Frequenzen.

Ein Referenzabstand ist dann nicht erforderlich. Störquellen durch nicht langzeitkonstante Effekte fallen durch die Differenzbildung heraus. Es ist aber eine höhere Präzision bei Bestimmung der Phasenlagen nötig.

Zur weiteren mathematischen Beschreibung der Signale werden folgende Abkürzungen verwendet:

$f_1, f_2,$   Trägerfrequenzen des Lesegerätes
$\lambda_1, \lambda_1$   Wellenlänge der Trägerfrequenz; $\lambda_{1,2}$ = c/$f_{1,2}$
$\alpha_1, \alpha_2$   Phasenlagen; $\alpha_{1,2} = 2\pi * t/T_{1,2}$

Die Formel für den Abstand bei zwei unterschiedlichen Phasenlagen und Trägerfrequenzen lautet dann:

$$a = (\alpha_2 - \alpha_1) * c/4\pi(f_2 - f_1)$$

Erst bei Strecken $|\lambda_2 - \lambda_1| \geq \min(\lambda_{1,2})$ entstehen wiederum Mehrdeutigkeiten.

Durch entsprechende Auswahl der Trägerfrequenzen kann im UHF-Bereich ein Abstandsbereich innerhalb der durch die übliche geringe Sendeleistung des Lesegerätes begrenzten Reichweite des Lesefeldes ohne Mehrdeutigkeiten erfasst werden. Bei Lesegeräten mit größerer Lesereichweite oder bei höheren Trägerfrequenzen kann die Phasenlage auch bei mehr als zwei Trägerfrequenzen gemessen werden, um diese Mehrdeutigkeiten aufzulösen.

Gemäß einer Weiterbildung kann während der Lokalisierungszeitspanne die Phasenlage wenigstens zweimal mit zeitlichem Abstand bestimmt werden und eine Änderung der Phasenlage im zeitlichen Abstand als Relativbewegung zwischen Lesegerät und Detektierplättchen ermittelt werden, während eine Übereinstimmung als konstanter Abstand zwischen Lesegerät und Detektierplättchen ermittelt wird.

Durch zeitlich versetzte Abstandmessungen wird ein Kriterium ermittelt, ob sich Lesegerät und Detektierplättchen im Abstand relativ zueinander bewegen oder nicht. Eine Nutzungsmöglichkeit dieser Kriterium besteht darin, mit Detektierplättchen versehene Güter auf einer bewegten Transporteinheit, z. B. einer Palette auf einem Gabelstapler von stationären mit Detektierplättchen versehene Gütern, z. B. auf Paletten in einem Regal voneinander zu unterscheiden.

Darüber hinaus kann aus dem Maß der Änderung des Abstandes oder der Phasenlage innerhalb eines Zeitintervalls die Geschwindigkeit und/oder der Richtungsvektor der Bewegung ermittelt werden.

Bei einer technischen Ausführung des Verfahrens wird das Detektiersignal während der Lokalisierungszeitspanne mit einem Signal moduliert, welches zwischen wenigstens zwei Zuständen, z. B. A und B, wechselt. Das vom Lesegerät empfangene Detektiersignal wird in einem Demodulator durch Multiplikation mit einem zur Trägerfrequenz synchronen Signal in eine Inphase- und eine Quadraturkomponente zerlegt. Aus der Differenz der Signalanteile der wenigstens zwei Zustände für die Inphasekomponente wird die Inphasekomponente des Modulationssignals gewonnen und aus der Differenz der Signalanteile der wenigstens zwei Zustände für die Quadraturkomponente wird die Quadraturkomponente des Modulationssignals gewonnen. Die Phasenlage wird dann trigonometrisch bestimmt.

Zur mathematischen Beschreibung der Signale werden folgende Abkürzungen verwendet:

$X(t)$ — der Amplitudenverlauf des unmodulierten Trägersignals

$U_{IN-A}$ — Empfangssignal im Modulatorzustand A

$U_{IN-B}$ — Empfangssignal im Modulatorzustand B

$U_A$ — vom Detektierplättchen beeinflusster Signalanteil A

$U_B$ — vom Detektierplättchen beeinflusster Signalanteil B

$U_{KI}$ — vom unmodulierten Trägersignal beeinflusster Signalanteil der Inphasekomponente

$U_{KQ}$ — vom unmodulierten Trägersignal beeinflusster Signalanteil der Quadraturkomponente

$U_{AI}$ — vom Detektierplättchen beeinflusster Signalanteil A der Inphasekomponente

$U_{AQ}$ — vom Detektierplättchen beeinflusster Signalanteil A der Quadraturkomponente

$U_{BI}$ — vom Detektierplättchen beeinflusster Signalanteil B der Inphasekomponente

$U_{BQ}$ — vom Detektierplättchen beeinflusster Signalanteil B der Quadraturkomponente

$U_I$ — Inphasekomponente des Modulationssignals

$U_Q$ — Quadraturkomponente des Modulationssignals

$\varphi$ — Phase allgemein

$\varphi_A$ — Phase des vom Detektierplättchen beeinflussten Signalanteils A

$\varphi_B$ — Phase des vom Detektierplättchen beeinflussten Signalanteils B

Vom Lesegerät wird ein unmoduliertes Trägersignals der Form $X(t) = \cos(2\pi ft) = \cos(x(t))$ erzeugt und zum Detektierplättchen übertragen. Ein Modulator des Detektierplättchens moduliert das Trägersignal mit einem Modulationssignal, das zwischen den wenigstens zwei Zuständen A und B wechselt. Das Lesegerät empfängt neben dem Trägersignal durch direkte Einkopplung und Reflexion einen Teil des modulierten Detektiersignals. Das Empfangssignal im Modulatorzustand A ist:

$$U_{IN-A} = U_A * \cos(x+\varphi_A) + U_{KI} * \cos(x) + U_{KQ} * \sin(x).$$

Das Empfangssignal im Modulatorzustand B ist:

$$U_{IN-B} = U_B * \cos(x+\varphi_B) + U_{KI} * \cos(x) + U_{KQ} * \sin(x).$$

In einem I/Q-Demodulator wird das Eingangssignals mit einem Referenzsignal und einem um 90° phasenverschobenen Referenzsignal multipliziert. Das Ergebnis der Multiplikation lautet in der allgemeinen normierten Form für die I-Komponente:

$$\cos(x)*\sin(x+\varphi) = -\tfrac{1}{2} *\sin(\varphi) + \tfrac{1}{2} *\sin(2x+\varphi)$$

und für die Q-Komponente:

$$\sin(x)*\sin(x+\varphi) = +\tfrac{1}{2} *\cos(\varphi) - \tfrac{1}{2} *\cos(2x+\varphi).$$

Hierbei steht der Ausdruck sin(x+φ) für das Empfangssignal und die Ausdrücke sin(x) bzw. cos(x) repräsentieren das Referenzsignal bzw. sein phasenverschobenes Äquivalent. Das 2x im letzten Term steht für Signalanteile der doppelten Trägerfrequenz, die anschließend durch Tiefpassfilter unterdrückt werden.

Für das Signal

$$U_{IN-A} = U_A * \cos(x+\varphi_A) + U_{KI} * \cos(x) + U_{KQ} * \sin(x)$$

ergibt sich durch die Multiplikation dann für den I-Kanal:

$$\cos(x)*U_{IN-A} = U_{AI} = U_A /2 * \cos(\varphi_A) + U_A /2 * \cos(2x+\varphi_A )$$
$$+ U_{KI} /2 * \cos(0) + U_{KI} /2 * \cos(2x)$$
$$- U_{KQ} /2 * \sin(0) + U_{KQ} /2 * \sin(2x)$$

und für den Q-Kanal:

$$\sin(x)*U_{IN-A} = U_{AQ} = U_A /2 * \sin(\varphi_A) + U_A /2 * \sin(2x+\varphi_A)$$
$$+ U_{KI} /2 * \sin(0) + U_{KI} /2 * \sin(2x)$$
$$+ U_{KQ} /2 * \cos(0) - U_{KQ} /2 * \cos(2x).$$

Für das Signal

$$U_{IN-B} = U_B * \cos(x+\varphi_B) + U_{KI} * \cos(x) + U_{KQ} * \sin(x)$$

ergibt sich durch die Multiplikation dann für den I-Kanal:

$$\cos(x) * U_{IN-B} = U_{BI} = U_B /2 * \cos(\varphi_B) + U_B /2 * \cos(2x+\varphi_B )$$

$$+ U_{KI} /2 * \cos(0) + U_{KI} /2 * \cos(2x)$$

$$- U_{KQ} /2 * \sin(0) + U_{KQ} /2 * \sin(2x)$$

und für den Q-Kanal:

$$\sin(x) * U_{IN-B} = U_{BQ} = U_B /2 * \sin(\varphi_B) + U_B /2 * \sin(2x+\varphi_B)$$

$$+ U_{KI} /2 * \sin(0) + U_{KI} /2 * \sin(2x)$$

$$+ U_{KQ} /2 * \cos(0) - U_{KQ} /2 * \cos(2x).$$

Durch Abtrennen der hochfrequenten Anteile bleiben übrig für den I-Kanal:

$$U_{AI} = U_A /2 * \cos(\varphi_A) + U_{KI} /2$$

$$U_{BI} = U_B /2 * \cos(\varphi_B) + U_{KI} /2$$

und für den Q-Kanal:

$$U_{AQ} = U_A /2 * \sin(\varphi_A) + U_{KQ} /2$$

$$U_{BQ} = U_B /2 * \sin(\varphi_A) + U_{KQ} /2.$$

Durch Differenzbildung wird der vom unmodulierten Trägersignal beeinflusste Signalanteil $U_{KI}$ bzw. $U_{KQ}$ entfernt und es verbleiben die Inphasekomponente des Modulationssignals $U_I$ und die Quadraturkomponente des Modulationssignals $U_Q$ als einzige Größen, die nach einer Tiefpassfilterung gemessen werden.

$$U_I = U_B /2 * \cos(\varphi_B) - U_A /2 * \cos(\varphi_A)$$

$$U_Q = U_B /2 * \sin(\varphi_B) - U_A /2 * \sin(\varphi_A)$$

Die Phasenlage des aktuellen Abstandes bezogen auf eine Referenzphasenlage eines Referenzabstandes ergibt sich dann als $\alpha = \arctan (U_Q/U_I)$ .

In die Phasenlage $\alpha$ gehen Phasenverschiebungen durch Laufzeiten bei der Signalverarbeitung innerhalb des Lesegerätes und des Detektierplättchens ein. Diese Phasenverschiebungen werden aber durch Bezug auf eine Referenzphase bei einem Referenzabstand kompensiert.

Unter der Voraussetzung, dass die Modulationszustände A und B zugeordnet werden können, ist a = $\alpha$ * c/4nf für eine Strecke < $\lambda$/2. Können die Zustände A und B zwar unterschieden, aber nicht zugeordnet werden, ist nur ein Winkelbereich für $\alpha$ von 0° bis 180° eindeutig. Mehrdeutigkeiten treten dann bereits im Abstand von $\lambda$/4 auf.

Ferner kann aus den Inphase- und Qadraturkomponenten der einzelnen Messwerte durch $U^2 = U_I^2 + U_Q^2$ ein resultierender Amplitudenwert des Detektiersignals bestimmt werden.

Dadurch können die ermittelten Abstandwerte ergänzend verifiziert werden. Außerdem ist durch Auswertung der Amplitude des Detektiersignals bei bekanntem Abstand eine vergleichende Qualitätsprüfung von Detektierplättchen bei Produktion und Einsatz möglich. Eine Auswertung der Amplituden kann über einen großen Frequenzbereich durchgeführt werden, um z. B. Resonanzfrequenz und Güte auszumessen.

Um eine Zuordnung zu den wenigstens zwei Modulationszuständen A und B herzustellen, können gemäß einer Weiterbildung die die Signalanteile der wenigstens zwei Zustände über wenigstens einen Bewertungszeitraum mit wenigstens zwei eine erwartete Signalfolge umfassenden Bewertungsfunktionen bewertet werden. Ein eine maximale Amplitude lieferndes Bewertungsergebnis wird als Amplitude der Signalanteile der wenigstens zwei Zustände ausgewertet.

Entspricht die empfangene Signalfolge der erwarteten Signalfolge und wird die empfangene Signalfolge phasensynchron mit der die erwartete Signalfolge umfassenden Bewertungsfunktionen z. B. durch Multiplikation bewertet so liefert das Bewertungsergebnis einen maximalen positiven Wert, der einem Amplitudenwert entspricht. Anderenfalls liefert das Bewertungsergebnis einen im Vergleich zum maximalen positiven Wert kleineren positiven oder auch negativen Wert. Bei Bewertung mit zwei oder mehreren Bewertungsfunktionen ergeben sich somit unterschiedliche Bewertungsergebnisse. Beim Bewertungsergebnis mit der maximalen Amplitude ist die Wahrscheinlichkeit am größten, das die wenigstens zwei Zustände A und B richtig zugeordnet sind.

Ein Spezialfall liegt vor, wenn lediglich zwei Bewertungsfunktionen genutzt werden, die sich nur um einen konstanten Faktor unterscheiden. Eine Bewertung mit der zweiten Bewertungsfunktion entspricht dann einer Multiplikation des Bewertungsergebnisses der ersten Bewertungsfunktion mit diesem Faktor.

Die Amplituden der Signalanteile der wenigstens zwei Zustände können über mehrere Bewertungszeiträume gemittelt werden.

Durch die Mittelwertbildung werden Störanteile reduziert und so die Messgenauigkeit verbessert.

In der Nähe der zu identifizierenden Detektierplättchen kann ein Referenzdetektierplättchen in einem Referenzabstand zum Lesegerät angeordnet werden. Durch Vergleich der gemessenen Phasenlage mit einer Sollphasenlage für den Referenzabstand kann ein Korrekturwert ermittelt werden und die gemessene Phasenlage der identifizierenden Detektierplättchen mit dem Korrekturwert korrigiert werden.

Auf diese Weise lassen sich Einflüsse auf die Phasenlage, wie sie z. B. durch Reflexionen des Trägersignals und/oder des Detektiersignals an Gegenständen hervorgerufen werden, kompensieren.

Das Referenzdetektiersignal des Referenzdetektierplättchen kann mit einem vom Modulationssignal des zu identifizierenden Detektierplättchens abweichenden Modulationssignal moduliert werden und im Lesegerät das Referenzdetektiersignal des Referenzdetektierplättchen und das Detektiersignal des zu identifizierenden Detektierplättchens durch Filter getrennt und gleichzeitig ausgewertet werden.

Durch eine gleichzeitige Auswertung des Referenzdetektiersignals des Referenzdetektierplättchen und des Detektiersignals des zu identifizierenden Detektierplättchens gegenüber einer zeitversetzten Auswertung werden zeitveränderliche Einflüsse des Lesefeldes auf das Auswertungsergebnis vermieden.

Gemäß einer Weiterbildung können mehrere Abstandmessungen bei wenigstens zwei unterschiedlichen Antennenpositionen des Lesegerätes durchgeführt werden und aus den Schnittpunkten der durch Abstandmessungen ermittelten Abstandsortkurven der Antennenpositionen des Lesegerätes der Standort des Detektierplättchens bestimmt werden.

Dabei können die unterschiedlichen Antennenpositionen durch Umschalten mehrerer örtlich getrennter Antennen des Lesegerätes angesteuert werden.

Durch die Abstandmessungen bei unterschiedlichen Antennenpositionen wird die Lokalisierung weiter verbessert, da zusätzlich zum Abstand auch die Richtung zwischen Lesegerät und Detektierplättchen bestimmt werden kann.

Ergänzend kann nach Bestimmung des Standortes des Detektierplättchens die Strahlungskeule einer aus wenigstens zwei örtlich getrennter Antennen bestehenden Antennenanordnung durch phasenverschobene Ansteuerung der Antennen in Richtung des Detektierplättchens ausgerichtet wird.

Durch Ausrichtung der Strahlungskeule wird die Lesefeldstärke und gleichzeitig der Störabstand gegenüber einer mögliche Störstrahlung aus anderen Richtungen erhöht. Dadurch wird die Lesequalität der Detektiersignale verbessert, was sich auch günstig auf die Genauigkeit der Abstands- und der ggf. zusätzlichen Richtungsmessung auswirkt.

Ferner kann das Detektierplättchen vor der Abstandmessung durch das Lesegerät aus wenigstens zwei unterschiedlichen Antennenpositionen aktiviert werden. Ergänzend oder alternativ kann das Detektierplättchen vor der Abstandmessung durch das Lesegerät auf wenigstens zwei unterschiedlichen Trägerfrequenzen aktiviert werden.

Im UHF-Bereich kann durch Abschattungen oder Stehwellen aufgrund von Reflexionen die Lesefeldstärke Minima aufweisen. Befindet sich ein Detektierplättchen zufällig am Ort eines solchen Minimums, besteht die Gefahr, dass das Detektierplättchen nicht identifiziert werden kann. Durch Nutzung unterschiedlicher Antennenpositionen und/oder Trägerfrequenzen wird die Verteilung der Lesefeldstärke verändert. Dadurch erhöht sich die Wahrscheinlichkeit, Detektierplättchen identifizieren zu können.

Nachfolgend wird die Erfindung anhand von Ausführungsbeispielen beschrieben, die in der Zeichnung dargestellt sind. Darin zeigen:

Fig. 1 eine Anordnung eines Lesegerätes und eines Detektierplättchens mit einer Darstellung von Signalkomponenten,

Fig. 2 ein Zeigerbild der Signalkomponenten am Eingang des Lesegerätes,

Fig. 3 ein Blockschaltbild einer Auswerteschaltung des Lesegerätes,

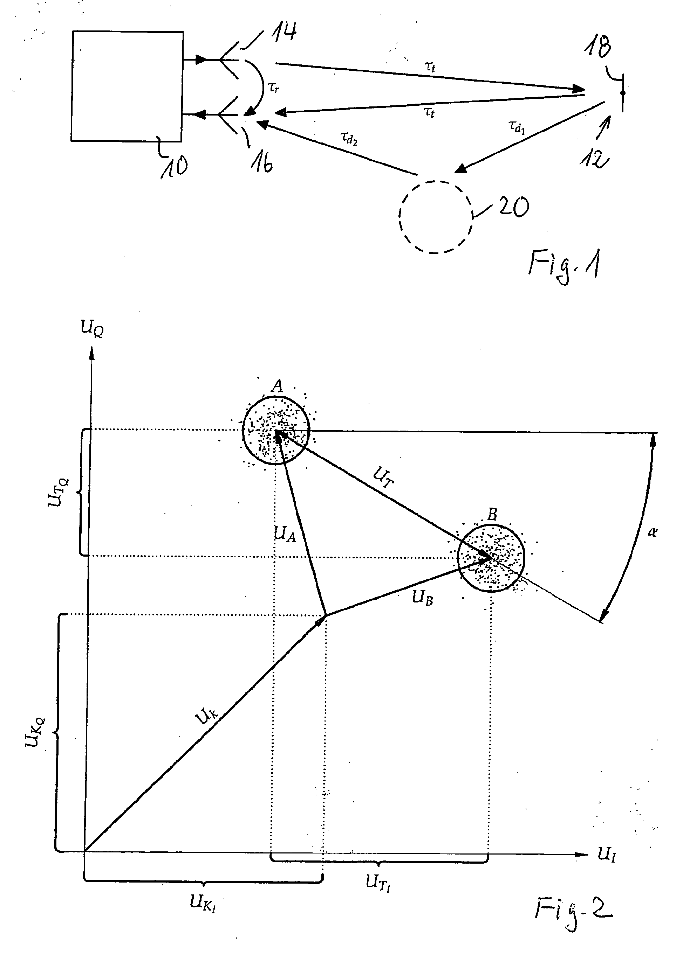

Fig. 1 zeigt eine Anordnung eines Lesegerätes 10 und eines Detektierplättchens 12 mit einer Darstellung von Signalkomponenten. Das Lesegerät 10 umfasst einen Sender, der über eine Sendeantenne 14 ein Trägersignal abstrahlt und einen Empfänger mit einer Empfangsantenne 16, einem Demodulator und einer Auswerteschaltung. Das Detektierplättchen 12 umfasst eine Detektierplättchenantenne 18, eine Steuerschaltung, einen Speicher und einen Modulator. Das Detektierplättchen 12 kann ein passiver, vom Lesegerät 10 mit Energie gespeistes Detektierplättchen oder ein Detektierplättchen mit eigener Energiequelle sein.

Der Modulator des Detektierplättchens 12 moduliert das Trägersignal des Lesegerätes 10 durch Bedämpfung im Takte seines Modulationsinhalts. Dies stellt eine Nutzsignalkomponente dar, die als Detektiersignal mit der Laufzeit $\tau_t$ von der Detektierplättchenantenne 18 zur Empfangsantenne 16 des Lesegerätes gelangt 10.

Außerdem gelangen zur Empfangsantenne 16 des Lesegerätes 10 auch Komponenten des Trägersignals mit der Laufzeit $\tau_r$ selbst durch direkte Einkopplung von der Sendeantenne 14 sowie durch Reflexionen des Trägersignals mit der Laufzeit $\tau_{d2}$ an Gegenständen 20. Zwar können auch Reflexionen des Detektiersignals mit der Laufzeit $\tau_{d1}$ an Gegenständen 20 auftreten, diese werden nachfolgend aber nicht weiter berücksichtigt.

Fig. 2 zeigt ein Zeigerbild der Signalkomponenten an der Empfangsantenne des Lesegerätes. Dabei sind die Komponenten des Trägersignals als direkte Einkopplung auf die Empfangsantenne und die durch Reflexionen des Trägersignals an Gegenständen gebildeten Komponenten zur Komponente $U_K$ zusammengefasst, die im komplexen Zeigerbild aus einer Inphasekomponente $U_{KI}$ und einer Quadraturkomponente $U_{KQ}$ bestehen. Diese Komponenten sind nicht durch das Detektierplättchen moduliert.

Im Detektierplättchen wird das Trägersignal mit einem Modulationssignal moduliert, das im Ausführungsbeispiel zwischen zwei Modulationszuständen A und B wechselt und durch einen Zeiger $U_A$ für den Modulationszustand A und einen Zeiger $U_B$ für den Modulationszustand B dargestellt wird. Die durch das Detektiersignal gebildete modulierte Komponente ist als Komponente $U_T$, bestehend im komplexen Zeigerbild aus einer Inphasekomponente $U_{TI}$ und einer Quadraturkomponente $U_{TQ}$. Störanteile des Übertragungsweges beeinflussen die Lage der Modulationszustände A und B im komplexen Zeigerbild was durch kreisförmige Bereiche mit mehreren streuenden Werten dargestellt ist.

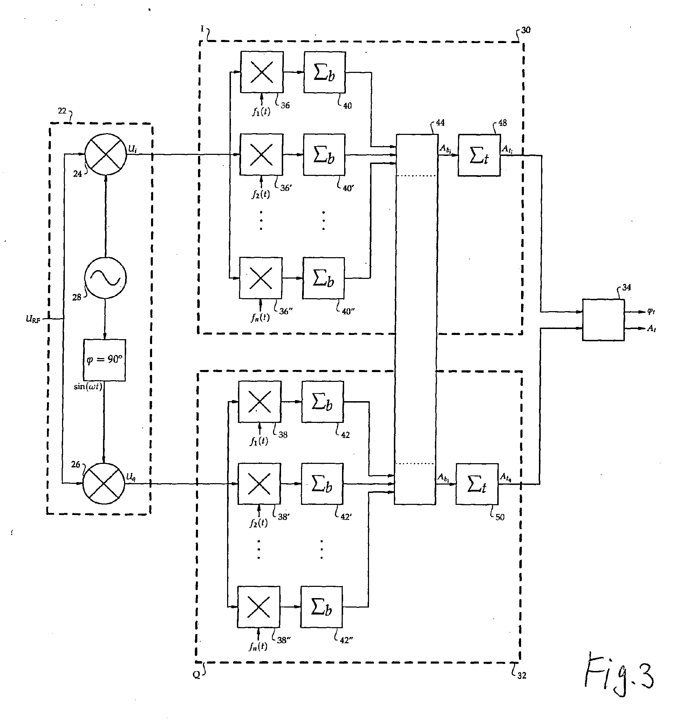

Fig. 3 zeigt ein Blockschaltbild einer Auswerteschaltung des Lesegerätes. Die Auswerteschaltung umfasst einen ersten I/Q-Demodulator 22, bestehend aus einem ersten Multiplizierer 24, einem zweiten Multiplizierer 26 und einem Lokaloszillator 28. An den ersten Multiplizierer 24 und den zweiten Multiplizierer 26 gelangt einerseits ein Eingangssignal $U_{RF}$ und andererseits ein Oszillatorsignals des Lokaloszillators 28 mit der gleichen Frequenz wie die Trägerfrequenz des Eingangssignals $U_{RF}$.

Das Oszillatorsignal wird dem ersten Multiplizierer 24 als $U_{LO} * \cos(\omega t)$ und dem zweiten Multiplizierer 26 um 90° phasenverschoben als $U_{LO} * \sin(\omega t)$ zugeführt. Nach dem I/Q-Demodulator 22 ist der Signalweg in einen Inphasekanal I und einen Quadraturphasekanal Q unterteilt. Daran schließen sich ein Signalprozessor 30 für den Inphasekanal I und ein Signalprozessor 32 für den Quadraturphasekanal Q an. Ausgänge des Signalprozessors 30 für den Inphasekanal I und des Signalprozessor 32 für den Quadraturphasekanal Q führen zu einem Rechner 34, der eine trigonometrische Berechnung der Phasenlage und der Amplitude vornimmt.

Die Signalprozessoren 30 und 32 umfassen n Multiplizierer 36, 36', 36"; 38, 38', 38" und Summierer 40, 40', 40''; 42, 42', 42" zur Multiplikation und Summierung der Multiplikationsergebnisse der Signale des Inphasekanals I und des Quadraturphasekanals Q mit Bewertungsfunktionen $f_1(t)$, $f_2(t)$, $f_n(t)$, einen gemeinsamen Amplitudenbewerter 44 und jeweils einen Summierer 48; 50 zur Mittelwertbildung über mehrere Bewertungszeiträume.

Im Signalprozessor 30; 32 werden die Signale $U_I$ des Inphasekanals I und die Signale $U_Q$ des Quadraturphasekanals Q den jeweiligen Multiplizierer 36, 36', 36" ; 38, 38', 38'' zugeführt und mit unterschiedlichen Bewertungsfunktionen $f_1(t)$, $f_2(t)$, $f_n(t)$ multipliziert. Die Bewertungsfunktionen umfassen jeweils eine innerhalb eines Bewertungszeitraums erwartete Signalfolge des Detektierplättchens und unterscheiden sich z. B. durch die Phasenlage der erwarteten Signalfolge. Die Multiplikation erfolgt gesondert für jeden Abtastwert innerhalb des Bewertungszeitraums (bei digitaler Signalverarbeitung z. B. für jeden Bit-Takt). Anschließend werden die Multiplikationsprodukte für jeden Abtastwert innerhalb des Bewertungszeitraums durch die Summierer 40, 40', 40"; 42, 42', 42" summiert.

Je nach Übereinstimmung der Bewertungsfunktionen mit den vom Detektierplättchen stammenden Eingangssignalen ergeben sich unterschiedliche Werte für die summierten Multiplikationsprodukte der Abtastwerte. Die maximalen Werte werden durch den nachfolgenden gemeinsamen Amplitudenbewerter 44 als Amplitudenwerte der Signalanteile $A_{bI}$ für den Inphasekanals I und $A_{bQ}$ für den Quadraturphasekanals Q ausgewertet und selektiert. Die nachfolgen Summierer 48; 50 bilden Mittelwerte der Amplitudenwerte der Signalanteile über mehrere Bewertungszeiträume, z. B. über ein vollständiges Datentelegramm des Detektierplättchens. Durch Normierung können auch die absoluten Amplituden der Signale für den Inphasekanals I und für den Quadraturphasekanals Q ermittelt werden.

Dem anschließenden Rechner 34 werden sowohl die gemittelten Amplituden $A_{tI}$ der Signale für den Inphasekanals I als auch die gemittelten Amplituden $A_{tQ}$ der Signale für den Quadraturphasekanals Q zugeführt. Durch trigonometrische Berechnung ermittelt der Rechner 34 daraus die Phasenlage $\varphi_t$ und die resultierende Amplitude $A_t$

Im Ausführungsbeispiel wird davon ausgegangen, dass die Modulationszustände des Detektiersignals zwischen A und B wechseln. Dann lautet die mathematische Beschreibung des Eingangssignals $U_{RF}$ für den Modulatorzustand A:

$$U_{RF-A} = U_A * \cos(x+\varphi_A) + U_{KI} * \cos(x) + U_{KQ} * \sin(x)$$

und für den Modulatorzustand B:

$$U_{RF-B} = U_B * \cos(x+\varphi_B) + U_{KI} * \cos(x) + U_{KQ} * \sin(x).$$

Durch Multiplikation mit dem Signal des Lokaloszillators lautet die mathematische Beschreibung des Multiplikationsproduktes des Modulatorzustandes A für den I-Kanal:

$$\cos(x)*U_{RF-A} = U_{AI} = U_A /2 * \cos(\varphi_A) + U_A /2 * \cos(2x+\varphi_A )$$

$$+ U_{KI} /2 * \cos(0) + U_{KI} /2 * \cos(2x)$$

$$- U_{KQ} /2 * \sin(0) + U_{KQ} /2 * \sin(2x)$$

und für den Q-Kanal:

$$\sin(x)*U_{RF-A} = U_{AQ} = U_A /2 * \sin(\varphi_A) + U_A /2 * \sin(2x+\varphi_A)$$

$$+ U_{KI} /2 * \sin(0) + U_{KI} /2 * \sin(2x)$$

$$+ U_{KQ} /2 * \cos(0) - U_{KQ} /2 * \cos(2x)$$

sowie des Modulatorzustandes B für den I-Kanal:

$$\cos(x) * U_{RF-B} = U_{BI} = U_B /2 * \cos(\varphi_B) + U_B /2 * \cos(2x+\varphi_B)$$

$$+ U_{KI} /2 * \cos(0) + U_{KI} /2 * \cos(2x)$$

$$- U_{KQ} /2 * \sin(0) + U_{KQ} /2 * \sin(2x)$$

und für den Q-Kanal:

$$\sin(x) * U_{RF-B} = U_{BQ} = U_B /2 * \sin(\varphi_B) + U_B /2 * \sin(2x+\varphi_B)$$

$$+ U_{KI} /2 * \sin(0) + U_{KI} /2 * \sin(2x)$$

$$+ U_{KQ} /2 * \cos(0) - U_{KQ} /2 * \cos(2x).$$

Durch Abtrennen der hochfrequenten Anteile mittels eines hier nicht dargestellten Tiefpassfilters verbleiben für den I-Kanal:

$$U_{AI} = U_A /2 * \cos(\varphi_A) + U_{KI} /2$$

$$U_{BI} = U_B /2 * \cos(\varphi_B) + U_{KI} /2$$

und für den Q-Kanal:

$$U_{AQ} = U_A /2 * \sin(\varphi_A) + U_{KQ} /2$$

$$U_{BQ} = U_B /2 * \sin(\varphi_A) + U_{KQ} /2.$$

Nach Bewertung und Mittelwertbildung liefert der I-Ausgang die Spannung

$$A_{tI} = U_I = U_B /2 * \cos(\varphi_B) - U_A /2 * \cos(\varphi_A)$$

und der Q-Ausgang die Spannung

$$A_{tQ} = U_Q = U_B /2 * \sin(\varphi_B) - U_A /2 * \sin(\varphi_A).$$

Die Phasenlage ist dann
$\alpha = \arctan(U_Q/U_I)$ und die resultierende Amplitude ist dann

$$A_t{}^2 \;=\; U_I{}^2 \;+\; U_Q{}^2.$$

**Patentansprüche**

1. Verfahren zur Lokalisierung eines Detektierplättchens, das ein Detektiersignal abstrahlt, das von einem Lesegerät empfangen und ausgewertet wird, **dadurch gekennzeichnet, dass** aus einem laufzeitabhängigen Merkmal des empfangenen Detektiersignals und der Ausbreitungsgeschwindigkeit elektromagnetischer Wellen der aktuelle Abstand zwischen dem Lesegerät und dem Detektierplättchen bestimmt wird.

2. Verfahren nach Anspruch 1 **dadurch gekennzeichnet, dass** als laufzeitabhängiges Merkmal des empfangenen Detektiersignals die Phasenlage des Detektiersignals ausgewertet wird.

3. Verfahren nach Anspruch 2, **dadurch gekennzeichnet, dass** wenigstens während einer Lokalisierungszeitspanne das Detektierplättchen vom Lesegerät ein Trägersignal empfängt und ein mit einem Modulationssignal moduliertes Detektiersignal abstrahlt, das die gleiche Frequenz wie das Trägersignal besitzt, wobei das Modulationssignal Signalpunkte aufweist, die in einem Signalraumdiagramm durch eine Gerade approximierbar sind, dass das vom Lesegerät empfangene Detektiersignal demoduliert wird, die Differenz der Phasenlage des Detektiersignals bei einem aktuellen Abstand zwischen Detektierplättchen und Lesegerät und einer Referenzphasenlage bestimmt wird und aus der Differenz der Phasenlage, der Trägerfrequenz und der Ausbreitungsgeschwindigkeit der elektromagnetischen Wellen der aktuelle Abstand zwischen dem Detektierplättchen und dem Lesegerät bestimmt wird.

4. Verfahren nach Anspruch 2, **dadurch gekennzeichnet, dass** wenigstens während einer Lokalisierungszeitspanne das Detektierplättchen vom Lesegerät Trägersignale einer ersten und anschließend wenigstens einer zweiten Frequenz empfängt und mit jeweils einem Modulationssignal modulierte Detektiersignale abstrahlt, die jeweils die gleiche Frequenz wie die Trägersignale besitzen, wobei die Modulationssignale Signalpunkte aufweisen, die in einem Signalraumdiagramm durch eine Gerade approximierbar sind, dass die vom Lesegerät empfangenen Detektiersignale demoduliert werden, die jeweilige Phasenlage des jeweiligen Detektiersignals bestimmt wird und durch gemeinsame Auswertung aus den Phasenlagen, den Trägerfrequenzen und der Ausbreitungsgeschwindigkeit der elektromagnetischen Wellen der aktuelle Abstand zwischen dem Detektierplättchen und dem Lesegerät bestimmt wird.

5. Verfahren nach Anspruch 2, **dadurch gekennzeichnet, dass** wenigstens während einer Lokalisierungszeitspanne das Detektierplättchen vom Lesegerät Trägersignale einer ersten und gleichzeitig wenigstens einer zweiten Frequenz empfängt und mit jeweils einem Modulationssignal modulierte Detektiersignale abstrahlt, die jeweils die gleiche Frequenz wie die Trägersignale besitzen, wobei die Modulationssignale Signalpunkte aufweisen, die in einem Signalraumdiagramm durch eine Gerade approximierbar sind, dass die vom Lesegerät empfangenen Detektiersignale durch Filter getrennt und demoduliert werden, die jeweilige Phasenlage des jeweiligen Detektiersignals bestimmt wird und durch gemeinsame gleichzeitige Auswertung aus den Phasenlagen, den Trägerfrequenzen und der Ausbreitungsgeschwindigkeit der elektromagnetischen Wellen der aktuelle Abstand zwischen dem Detektierplättchen und dem Lesegerät bestimmt wird.

6. Verfahren nach einem der Ansprüche 2 bis 5, **dadurch gekennzeichnet, dass** während der Lokalisierungszeitspanne die Phasenlage wenigstens zweimal mit zeitlichem Abstand bestimmt wird und eine Änderung der Phasenlage im zeitlichem Abstand als Relativbewegung zwischen Lesegerät und Detektierplättchen ermittelt, während eine Übereinstimmung als konstanter Abstand zwischen Lesegerät und Detektierplättchen ermittelt wird.

7. Verfahren nach Anspruch 6, **dadurch gekennzeichnet, dass** aus dem Maß der Änderung des Abstandes oder der Phasenlage innerhalb eines Zeitintervalls die Geschwindigkeit und/oder der Richtungsvektor der Bewegung ermittelt werden.

8. Verfahren nach einem der Ansprüche 3 bis 7, **dadurch gekennzeichnet, dass** das vom Lesegerät empfangene Detektiersignal in eine Inphase- und eine Quadratur-Komponente zerlegt wird, aus der Inphase- und der Quadratur-Komponente jeweils ein Amplitudenwert bestimmt wird und die Phasenlage durch eine trigonometrische Funktionen bestimmt wird.

9.  Verfahren nach Anspruch 8, **dadurch gekennzeichnet, dass** aus den Amplitudenwerten der Inphase- und der Quadratur-Komponente ein resultierender Amplitudenwert bestimmt wird und der resultierende Amplitudenwert zur Verifizierung des Abstandes oder bei bekanntem Abstand zur Qualitätsprüfung eines Detektierplättchens ausgewertet wird.

10. Verfahren nach einem der Ansprüche 3 bis 9, **dadurch gekennzeichnet, dass** das Detektiersignal während der Lokalisierungszeitspanne mit einem Signal moduliert wird, welches zwischen wenigstens zwei Zuständen wechselt, dass das vom Lesegerät empfangene Detektiersignal in einem Demodulator in eine Inphase- und eine Quadratur-Komponente zerlegt wird, dass aus der Differenz der Signalanteile der wenigstens zwei Zustände für die Inphasekomponente die Inphasekomponente des Modulationssignals gewonnen wird und aus der Differenz der Signalanteile der wenigstens zwei Zustände für die Quadraturkomponente die Quadraturkomponente des Modulationssignals gewonnen wird und dass die Phasenlage dann trigonometrisch aus der Inphasekomponente des Modulationssignals und der Quadratur-komponente des Modulationssignals bestimmt wird.

11. Verfahren nach Anspruch 10, **dadurch gekennzeichnet, dass** die Signalanteile der wenigstens zwei Zustände über wenigstens einen Bewertungszeitraum mit wenigstens zwei eine erwartete Signalfolge umfassenden Bewertungsfunktionen bewertet werden und dass ein eine maximale Amplitude lieferndes Bewertungsergebnis als Amplitude der Signalanteile der wenigstens zwei Zustände ausgewertet wird.

12. Verfahren nach Anspruch 10 oder 11, **dadurch gekennzeichnet, dass** Amplituden der Signalanteile der wenigstens zwei Zustände über mehrere Bewertungszeiträume gemittelt werden.

13. Verfahren nach einem der Ansprüche 2 bis 12, **dadurch gekennzeichnet, dass** in der Nähe der zu identifizierenden Detektierplättchen ein Referenzdetektierplättchen in einem Referenzabstand zum Lesegerät angeordnet wird, dass durch Vergleich der gemessenen Phasenlage mit einer Sollphasenlage für den Referenzabstand ein Korrekturwert ermittelt wird und die gemessene Phasenlage der identifizierenden Detektierplättchen mit dem Korrekturwert korrigiert wird.

14. Verfahren nach Anspruch 13, **dadurch gekennzeichnet, dass** das Referenzdetektiersignal des Referenzdetektierplättchen mit einem vom Modulationssignal des zu identifizierenden Detektierplättchens abweichenden Modulationssignal moduliert wird und im Lesegerät das Referenzdetektiersignal des Referenzdetektierplättchen und das Detektiersignal des zu identifizierenden Detektierplättchens durch Filter getrennt und gleichzeitig ausgewertet werden.

15. Verfahren nach einem der Ansprüche 1 bis 14, **dadurch gekennzeichnet, dass** mehrere Abstandmessungen bei wenigstens zwei unterschiedlichen Antennenpositionen des Lesegerätes oder mehrerer Lesegeräte durchgeführt werden und aus den Schnittpunkten der durch Abstandmessungen ermittelten Abstandsortkurven der Antennenpositionen des Lesegerätes oder der Lesegeräte der Standort des Detektierplättchens bestimmt wird.

16. Verfahren nach Anspruch 15, **dadurch gekennzeichnet, dass** die unterschiedlichen Antennenpositionen durch Umschalten mehrerer örtlich getrennter Antenne des Lesegerätes oder der Lesegeräte angesteuert werden.

17. Verfahren nach Anspruch 15 oder 16, **dadurch gekennzeichnet, dass** nach Bestimmung des Standortes des Detektierplättchens die Strahlungskeule einer aus wenigstens zwei örtlich getrennten Antennen bestehenden Antennenanordnung durch phasenverschobene Ansteuerung der Antennen in Richtung des Detektierplättchens ausgerichtet wird.

18. Verfahren nach Anspruch 15 oder 16, **dadurch gekennzeichnet, dass** das Detektierplättchen vor der Abstandmessung durch das Lesegerät aus wenigstens zwei unterschiedlichen Antennenpositionen aktiviert wird.

19. Verfahren nach einem der Ansprüche 4 bis 18 **dadurch gekennzeichnet, dass** das Detektierplättchen vor der Abstandmessung durch das Lesegerät auf wenigstens zwei unterschiedlichen Trägerfrequenzen aktiviert wird.

Fig. 1

Fig. 2

Fig.3